(19) Europäisches Patentamt
European Patent Office
Office européen des brevets

(11) EP 3 216 818 A2

(12) EUROPEAN PATENT APPLICATION
published in accordance with Art. 153(4) EPC

(43) Date of publication:
13.09.2017 Bulletin 2017/37

(21) Application number: 15857377.4

(22) Date of filing: 16.10.2015

(51) Int Cl.:
*C08G 67/02* (2006.01) *C08J 5/00* (2006.01)
*B29C 45/00* (2006.01) *B60T 11/26* (2006.01)
*B65D 81/00* (2006.01)

(86) International application number:
PCT/KR2015/010947

(87) International publication number:
WO 2016/072637 (12.05.2016 Gazette 2016/19)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 07.11.2014 KR 20140154619
19.11.2014 KR 20140161983
19.11.2014 KR 20140162008
19.11.2014 KR 20140162009

(71) Applicant: Hyosung Corporation
Seoul 04144 (KR)

(72) Inventors:
- CHOI, Jong In
Seoul 08329 (KR)
- YOON, Sung Kyoun
Anyang-si
Gyeonggi-do 14044 (KR)

(74) Representative: v. Bezold & Partner Patentanwälte - PartG mbB
Akademiestraße 7
80799 München (DE)

# (54) POLYKETONE RESIN COMPOSITION HAVING EXCELLENT GAS BARRIER PROPERTIES

(57) The present invention relates to a polyketone copolymer consisting of repeating units represented by general formulae (3) and (4) below, and a mixture composition thereof. The present invention has excellent has barrier properties and thus can be used for vehicle fuel tanks, vehicle hydrogen tank liners, sealed food containers, etc.

$$-(CH_2CH_2\text{-}CO)x- \quad (3)$$

$$-(CH_2CH(CH_3)\text{-}CO)y- \quad (4)$$

(wherein x and y denote the mol% of each of the general formulae (3) and (4) in a polymer).

EP 3 216 818 A2

## Description

### Technical Field

The present invention relates to a polyketone resin composition having excellent gas barrier properties, and relates to a polyketone resin composition that can be used as a vehicle fuel tank, a vehicle oil pan, a vehicle hydrogen tank liner, a sealed food container, and etc.

### Background Art

Polyketone polymers, which are linear alternating copolymers of carbon monoxide and olefinically unsaturated compounds, have high stability in presence of hydrocarbon liquids. The polyketone polymer is excellent in gas barrier properties and can be used as a vehicle fuel tank, a vehicle oil pan, a vehicle hydrogen tank liner, a sealed food container, and etc.

A molding technique using engineering plastics as a material for storing liquid for vehicle fuel is described in US4965104. Examples of the techniques include blow molding, rotational molding, vacuum molding, injection molding and extrusion.

In order to produce a typical fuel tank, it is common to use a blow molding technique. In a blow molding method, a parison, which is a tube of molten polymer, is prepared first and inflated the parison on an inner surface of a female mold to continuously form a hollow body.

An oil pan is responsible for storing or circulating engine oil which lubricates each sliding part inside an engine. The engine oil which is stored in the oil pan and supplied and circulated into the engine is in a state where impurities are removed. Therefore a filtering filter should be provided as a constituent in the oil pan.

Meanwhile, in order to prevent the engine oil from overflowing because of vibration, a buffle plate should be provided inside the oil pan. Korean Patent No. 10-445454 and Korean Patent No. 10-810865 disclose a vehicle oil pan using an ethylene vinyl alcohol copolymer, a polyethylene resin, and a polyamide resin. However, a normal polyamide resin conventionally used is a material having a high rate of hydrolysis and a high bromination rate by alcohol because of high equilibrium absorption rate, and is brominated by an alcoholic or mixed fuel such as ethanol used as a vehicle fuel. Therefore, if disassembled and liberated fragments block a fuel engine, there is a problem that a fuel supply may be interrupted.

Another area where engineering plastics are used for vehicular components is a hydrogen tank, which should have good gas barrier, because it needs to have basically no unintentional compressed air outflows and must maintain internal pressure as designed. US5429845 discloses a compressed gas tank for a vehicle, which comprises a non-metallic inner liner made of engineering plastics such as HDPE, polyamide, polypropylene, polyethylene or other elastomer and describes a storage tank manufactured as one unit by compression molding, blow molding, injection molding or any other known techniques. In this case, because the inner liner is manufactured as one unit by a method such as blow molding, it can prevent corrosion of a joint portion and leakage of compressed gas.

However, conventional resins including HDPE, polyamide, polypropylene, and polyethylene still do not have enough gas barrier properties for use as vehicle hydrogen tank liners. There is a problem such as a proper pressure in a tank cannot be maintained when a gas barrier property of the hydrogen tank liner is not enough, thereby failing to properly perform its role as a vehicle hydrogen tank.

### Disclosure

### Technical Problem

In order to solve the problems, the present invention is directed to providing a polyketone and a polyketone resin composition having excellent gas barrier properties.

The polyketone and polyketone resin composition have excellent gas barrier properties so that they can be used for vehicle fuel tanks, vehicle oil pan, vehicle hydrogen tank liners, sealed food containers, and etc.

### Technical Solution

The present invention is directed to providing a polyketone copolymer with excellent gas barrier properties manufactured with injection-molding a polyketone copolymer comprising repeating units represented by following general formula (1) and (2), wherein y/x is 0.03 to 0.3.

$$-(CH_2CH_2\text{-}CO)x- \qquad (1)$$

$-(CH_2CH(CH_3)-CO)y-$ (2)

(x and y are mole% of each of the general formula (1) and (2) in a polymer)

Further, the present invention provides a polyketone resin composition for vehicle oil pan blended with the above-mentioned polyketone copolymer and glass fiber.

Also, the present invention provides a vehicle hydrogen tank liner, which is manufactured by injection-molding the polyketone copolymer, nylon 6, and maleic anhydride grafted TPE.

Finally, the present invention provides a sealed food container manufactured from the polyketone copolymer.

The present invention provides a vehicle fuel tank which intrinsic viscosity of the polyketone copolymer is preferably 1.0 to 2.0 dl/g, in a polymerization of the polyketone copolymer, the ligand of the catalyst composition is ((2,2-dimethyl-1,3-dioxane-5,5 (methylene))bis(bis(2-methoxyphenyl)phosphine), a gas permeability coefficient of 0.01 gmm/$m^2$day or less when fuel filled at 23°C and a relative humidity of 50 % and a has permeability coefficient of 5 gmm/$m^2$day or less when fuel and 15 % methanol filled at 23°C and a relative humidity of 50 %.

The present invention provides a vehicle oil pan comprising a blend of glass fiber and a linear alternating polyketone copolymer composed of carbon monoxide and at least one kind of olefinically unsaturated hydrocarbon, wherein the glass fibers are 5 to 50 wt% based on the total blend, a ligand of a catalyst composition used in the polymerization of the polyketone is bis(methylene))bis(bis(2-methoxyphenyl)phosphine), and the polyketone copolymer has an intrinsic viscosity of 1.0 to 2.0 dl/g, a molar ratio of ethylene to propylene of 9 to 24:1, and a molecular weight distribution of 1.5 to 2.5.

The present invention provides a vehicle hydrogen tank liner comprising a linear alternating polyketone copolymer composed of carbon monoxide, and at least one kind of olefinically unsaturated hydrocarbon, and manufactured by injection molding a polyketone resin composition having a hydrogen permeability of 0.1 ccmm/$m^2$·atm·day or less under conditions of 23°C and 60 % RH using a mixture of 75 to 85 weight% of the polyketone copolymer, 5 to 15 weight% of nylon 6 and 5 to 15 weight% of a maleic anhydride grafted TPE, wherein the polyketone copolymer is comprising a repeating unit represented by a following formula 1.

[Formula 1] $-CO-(-CH_2-CH_2-)-x-CO-(G)-y-$

The present invention provides a vehicle hydrogen tank liner which the polyketone copolymer has an intrinsic viscosity of 1.0 to 2.0 dl/g and a molecular weight distribution of 1.5 to 2.5.

Further, the polyketone copolymer is manufactured by a step of preparing a catalyst composition comprising a palladium compound, an acid having a pKa value of 6 or less, and a bidentate compound of phosphorus; a step of preparing a mixed solvent of methanol and water; a step of conducting a polymerization in presence of the catalyst composition and the mixed solvent to prepare a linear terpolymer of carbon monoxide, ethylene and propylene; a step of removing the remaining catalyst composition from the prepared linear terpolymer using a solvent to obtain a polyketone polymer.

The present invention provides a sealed food container which the polyketone copolymer is manufactured by a step of preparing a catalyst composition comprising a palladium compound, an acid having a pKa value of 6 or less, and a bidentate compound of phosphorus; a step of preparing a mixed solvent of methanol and water; a step of conducting a polymerization in presence of the catalyst composition and the mixed solvent to prepare a linear terpolymer of carbon monoxide, ethylene and propylene; a step of removing the remaining catalyst composition from the prepared linear terpolymer using a solvent to obtain a polyketone resin.

Also, the present invention provides a sealed food container which the polyketone copolymer has an intrinsic viscosity of 1.0 to 2.0dl/g and a molecular weight distribution of 1.5 to 2.5 and has a Notched Izod impact strength measured in ASTM D256, 1/4-inch thick specimens is greater than 10 kJ/$m^2$, and an oxygen-permeability at 23°C and 90 % RH is 0.01 to 0.001 cc/pack·day.

## Advantageous Effects

A polyketone and a polyketone resin composition produced by manufacturing method of the present invention are excellent in gas barrier properties and exhibit properties suitable for use in vehicle fuel tanks, vehicle oil pans, vehicle hydrogen tank liners, sealed food containers, and etc.

## Detailed Description of the Preferred Embodiments

Polyketone according to the present invention is of linear alternative structure, and unsaturated hydrocarbon per one molecule comprises carbon monoxide. The polyketone is used as precursor and number of suitable ethylenically

unsaturated hydrocarbon is 20 or less and preferably 10 or less carbon atoms. Also, ethylenically unsaturated hydrocarbon is ethane and α-olefin, for example, aliphatic such as propene, 1-butene, iso-butene, 1-hexene, 1-octene, or comprising aryl substituent on another aliphatic molecular, especially aryl aliphatic comprising aryl substituent on ethylenically unsaturated carbon atom. Examples of aryl aliphatic hydrocarbon among ethylenically unsaturated hydrocarbon are styrene, p-methyl styrene, p-ethyl styrene, and m-isopropyl styrene. Polyketone polymer preferably used in the present invention is copolymer of carbon monoxide and ethane or the second ethylenically unsaturated hydrocarbon having carbon monoxide, ethane, and at least 3 carbon atoms, especially α-olefin-based terpolymer such as propene.

When the polyketone terpolymer is used as the main polymer component of blend of the present invention, regarding each unit comprising the second hydrocarbon part in terpolymer, there are at least 2 units comprising the ethylene part. Number of units comprising the second hydrocarbon part is preferably 10 to 100.

Number average molecular weight measured by gel penetration chromatography is preferably 100 to 200,000 and especially polyketone of 20,000 to 90,000 is preferable. Physical properties of polymer are set according to molecular amount, according to whether polymer is copolymer or terpolymer, and in case of terpolymer according to character of the second hydrocarbon. Ordinary melting point of polymer used in the present invention is 175°C to 300°C, and generally 210°C to 270°C. Limiting Viscosity Number (LVN) of polymer measured by standard viscosity measuring device and HFIP (Hexafluoroisopropylalcohol) in 60°C is 0.5 dl/g to 10 dl/g, and preferably 1.0 dl/g to 2.0 dl/g. In this case, if Limiting Viscosity Number is less than 0.5 dl/g, mechanical properties are declined, and if it is more than 10 dl/g, processability is declined.

Polyketone manufacturing method can use liquefied polymerization implemented under alcohol solvent through catalyst composition comprising carbon monoxide, olefin palladium compound, acid of 6 or less pKa, and bidentate ligand compound of phosphorus.

Polymerization reaction temperature is preferably 50 to 100°C and reaction pressure is 40 to 60 bar. After polymerization of polymer, through purified process retrieving and remained catalyst composition is removed by solvent such as alcohol or acetone.

In this case, for palladium compound, acetic acid palladium is preferable and the amount is preferably 10-3 to 10-11 mole. Examples of acid with less than 6 pKa are trifluoroacetic acid, p-toluenesulfonic acid, sulfuric acid, sulfonic acid, and etc. In the present invention, trifluoroacetic acid is used and the amount is compared to palladium 6 to 20 equivalent weight. Also, bidentate ligand compound of phosphorus is preferably ((2,2-dimethyl-1,3-dioxane-5,5-diyl)bis(methylene))bis(bis(2-methoxyphenyl)phosphine), and the amount is compared to palladium 1 to 1.2 equivalent weight.

The following statement explains polymerization of polyketone in detail.

Monoxide, ethylenically unsaturated compound, and one or more olefinically unsaturated compound, three or more copolymer, especially monoxide-oriented repeating unit, and ethylenically unsaturated compound-oriented repeating unit, and propylenically unsaturated compound-oriented repeating unit are alternatively connected in structure of polyketone, the polyketone is excellent in mechanical properties and thermal properties and processibility, and having high wear resistance, chemical resistance, and gas barrier ability, therefore, useful in a variety of applications. High molecular weight of copolymer, terpolymer, or more copolymerized polyketone has higher processability and thermal properties, and regarded as useful engineering plastic with excellent economic efficiency. Especially, having high wear resistance used as component such as automobile gear, having high chemical resistance used as lining material of chemical transport pipe, and having high gas barrier ability used as light weight gasoline tank. In addition, in case of using ultra high molecular weight polyketone having 2 or more intrinsic viscosity in fiber, elongation of high magnification is possible, fiber having high strength and high elasticity modulus oriented in elongation direction, and it is suitable material in construction material and industrial material such as reinforcement of belt and rubber hose, and reinforcement of tire cord and concrete.

Polyketone manufacturing method under the presence of (a) Group 9, Group 10 or Group 11 transition metal compound, (b) organic metal complex catalyst comprising ligand having Group 15 element in polyketone manufacturing method by terpolymerization of carbon monoxide, ethylenically and propylenically unsaturated compound among liquid medium, the carbon monoxide, ethylene, and propylene liquefied polymerized in mixed solvent of alcohol (for example, methanol) and water, and produces linear terpolymer, and for the mixed solvent, mixture of methanol 100 part by weight and water 2 to 10 part by weight can be used. In mixed solvent if content of water is less than 2 part by weight, ketal is formed and thermal stability can be declined in process, and if content of water is more than 10 part by weight, mechanical properties of product can be declined.

In this case, catalyst comprises periodic table (IUPAC Inorganic Chemistry Nomenclature revised edition, 1989) (a) Group 9, Group 10 or Group 11 transition metal compound, (b) ligand having Group 15 element.

Among Group 9, Group 10 or Group 11 transition metal compound (a), examples of Group 9 transition metal compound are cobalt or ruthenium complex, carbon acid salt, phosphate, carbamate, sulfonate, and etc., specific examples are cobalt acetate, cobalt acetylacetate, ruthenium acetate, trifluoro-ruthenium acetate, ruthenium acetylacetate, trifluoro-methane sulfonic acid, and etc.

Examples of Group 10 transition metal compound are nickel or palladium complex, carbon acid salt, phosphate, carbamate, sulfonate, and etc., specific examples are nickel acetate, nickel acetylacetate, palladium acetate, trifluoro-palladium acetate, palladium acetylacetate, palladium chloride, bis(N,N-diethyl carbamate)bis(diethylamine)palladium, palladium sulfate, and etc.

Examples of Group 11 transition metal compound are copper or silver complex, carbon acid salt, phosphate, carbamate, sulfonate, and etc., specific examples are copper acetate, trifluoro-copper acetate, copper acetylacetate, silver acetate, trifluoro-silver acetate, silver acetylacetate, trifluoro-methane sulfonic silver, and etc.

Among them transition metal compound (a) preferable in cost and economically are nickel and copper compound, transition metal compound (a) preferable in the yield and molecular weight of polyketone is palladium compound, and in terms of enhancing catalyst activity and intrinsic viscosity using palladium acetate is most preferable.

Examples of ligand having Group 15 atom (b) are nitrogen ligand such as 2,2'bipyridyl, 4,4'-dimethyl-2,2'bipyridyl, 2,2'-bi-4-picoline,2,2'-bikinoline, and phosphorus ligand such as 1,2-bis(diphenylphosphino)ethane, 1,3-bis(diphenylphosphino)propane, 1,4-bis(diphenylphosphino)butane, 1,3-bis[di(2-methyl)phosphino]propane, 1,3-bis[di(2-isopropyl)phosphino]propane, 1,3-bis[di(2-methoxyphenyl)phosphino]propane, 1,3-bis[di-methoxy-4-sodium sulfonate-phenyl)phosphino]propane, 1,2-bis(diphenylphosphino)cyclohexane,1,2-bis(diphenylphosphino)benzene, 1,2-bis[[diphenylphosphino]methyl]benzene, 1,2-bis[[di(2-methoxyphenyl)phosphino]methyl]benzene, 1,2-bis[[di(2-methoxy-4-sodium sulfonate-phenyl)phosphino]methyl]benzene, 1,1'-bis(diphenylphosphino)ferrocene, 2-hydroxy-1,3-bis[di(2-methoxyphenyl)phosphino]propane, 2,2-dimethyl-1,3-bis[di(2-methoxyphenyl)phosphino]propane, and etc.

Among them preferable ligand having Group 15 element (b) is phosphorous ligand having Group 15 element, especially in terms of the yield of polyketone preferable phosphorous ligand is 1,3-bis[di(2-methoxyphenyl)phosphino]propane, 1,2-bis[[di(2-methoxyphenyl)phosphino]methyl]benzene, in terms of molecular weight of polyketone preferably 2-hydroxy-1,3-bis[di(2-methoxyphenyl)phosphino]propane, in terms of safety and not needing organic solvent preferably water soluble 1,3-bis[di(2-methoxy-4-sodium sulfonate-phenyl)phosphino]propane, 1,2-bis[[di(2-methoxy-4-sodium sulfonate-phenyl)phosphino]methyl]benzene, in terms of economic aspect and easy synthesis preferably 1,3-bis(diphenylphosphino)propane, 1,4-bis(diphenylphosphino)butane. Preferable ligand having Group 15 element (b) is 1,3-bis[di(2-methoxyphenyl)phosphino]propane or 1,3-bis(diphenylphosphino)propane, and most preferably 1,3-bis[di(2-methoxyphenyl)phosphino]propane or ((2,2-dimethyl-1,3-dioxane-5,5-diyl)bis(methylene))bis(bis(2-methoxyphenyl)phosphine).

The liquid medium is preferably a mixed solvent of an alcohol (for example, methanol) and water, and the carbon monoxide, ethylene, and propylene liquefied polymerized in the mixed solvent to produce linear terpolymer, and for the mixed solvent, mixture of methanol 100 part by weight and water 2 to 10 part by weight can be used. In mixed solvent if content of water is less than 2 part by weight, ketal is formed and thermal stability can be declined in process, and if content of water is more than 10 part by weight, mechanical properties of product can be declined.

When the polyketone of the present invention is polymerized, benzophenone may be added as needed. By adding benzophenone, the effect of improving the intrinsic viscosity of the polyketone can be achieved. An amount of benzophenone added is such that a molar ratio of (a) the ninth, tenth or eleventh transition metal compound to benzophenone is maintained at 1:5-100, preferably 1:40-60. If the molar ratio of the transition metal to the benzophenone is less than 1:5, effect of improving the intrinsic viscosity of the produced polyketone is unsatisfactory. If the molar ratio of the transition metal to the benzophenone is more than 1:100, the polyketone catalytic convergence is rather reduced.

An amount of (A) the Group 9, Group 10 or Group 11 transition metal compound used varies depending on a kind of an ethylenically unsaturated compound selected and other polymerization conditions, but is usually 0.01 to 100 mmol, preferably 0.01 to 10 mmol, per liter of capacity of reaction zone. The capacity of the reaction zone refers to liquid phase capacity of a reactor. An amount of the ligand(b) used is not particularly limited, but is usually 0.1 to 3 mol, preferably 1 to 3 mol, per 1 mol of the transition metal compound (a).

Examples of ethylenically unsaturated compound polymerized with carbon monoxide are ethylene, propylene, 1-butene, 1-hexene, 4-methyl-1-pentene, 1-octene, 1-decene, 1-dodecene, 1-tetradecene, 1-hexadecene, $\alpha$-olefin such as vinyl cyclohexane; alkenyl aromatic compound such as styrene, $\alpha$-methyl styrene; cyclopentane, norbornene, 5-methyl norbornene, tetracyclododecene, tricyclo dodecane, tricyclo undecene, pentacyclopentadecene, pentacyclohexadecene, 8-ethyltetracyclododecene; halogenation vinyl such as vinyl chloride; acrylic ester such as ethyl acrylate and methyl acrylate. Among them preferable ethylenically unsaturated compound is $\alpha$-olefin, and more preferably $\alpha$-olefin with carbon number of 2 to 4, and most preferably ethylene.

Terpolymer of carbon monoxide, the ethylenically unsaturated compound and propene occurs by organic metal complex catalyst comprising the Group 9, Group 10 or Group 11 transition metal compound (a), ligand having Group 15 element (b), and the catalyst is formed by contacting to the 2 components. Contacting method can be selected arbitrary. In other words, among suitable solvent, a solution of mixed 2 components in advance can be used, or each of 2 components can separately be provided to the polymerization system and contact in polymerization system.

Examples of a polymerization method include a solution polymerization method using a liquid medium, a suspension polymerization method, a vapor phase polymerization method in which a small amount of a polymer is impregnated with a high concentration catalyst solution, and etc. The polymerization may be either batch or continuous. The reactor used for the polymerization may be a known reactor as it is, or may be used by processing. Reaction temperature during the polymerization is suitably in a range of 50 to 100°C and reaction pressure is suitably in the range of 40 to 60 bar. The manufactured polymer is collected through filtration and purification after polymerization, and a remaining catalyst composition is removed with a solvent such as alcohol or acetone.

The collected polyketone polymer is extruded by an extruder. Extrusion temperature is preferably 230 to 260°C, and screw rotation speed is preferably in a range of 100 to 300 rpm. If the extrusion temperature is less than 230°C, kneading may not occur properly, and if the extrusion temperature is more than 260°C, a problem relating to heat resistance of the resin may occur. If screw rotating speed is less than 100 rpm, smooth kneading may not occur.

[formula 2]

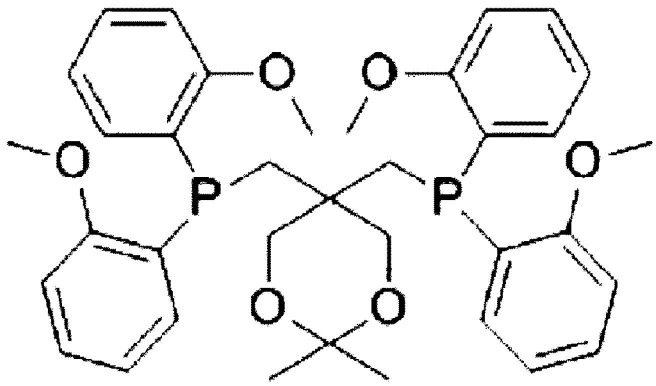

((2,2-dimethyl-1,3-dioxane-5,5-diyl)bis(methylene))bis(bis(2-methoxyphenyl)phosphine) of formula 2 shows the same activity expression as 3,3-bis-[bis-(2-methoxyphenyl)phosphonylmethyl]-1,5-dioxa-spiro[5,5]undecane which is known as showing highest activity among polyketone polymerization catalyst introduced until now, and the structure is simpler and molecular weight is lower. Therefore, the present invention obtains highest activity as polymerization catalyst in relevant field, and providing novel polyketone polymerization catalyst with lower manufacturing cost and production cost. Manufacturing method of ligand for polyketone polymerization catalyst is as follows. Using bis(2-methoxyphenyl)phosphine, 5,5-bis(bromomethyl)-2,2-dimethyl-1,3-dioxane and sodium hydride (NaH) and obtaining ((2,2-dimethyl-1,3-dioxane-5,5-diyl)bis(methylene))bis(bis(2-methoxyphenyl)phosphine) features manufacturing method of ligand for polyketone polymerization catalyst. Manufacturing method of ligand for polyketone polymerization catalyst of the present invention is different from conventional synthesis method of 3,3-bis-[bis-(2-methoxyphenyl)phosphonylmethyl]-1,5-dioxa-spiro[5,5]undecane as under safe environment not using lithium through simple process, ((2,2-dimethyl-1,3-dioxane-5,5-diyl)bis(methylene))bis(bis(2-methoxyphenyl)phosphine) can be commercially mass-synthesized.

((2,2-dimethyl-1,3-dioxane-5,5-diyl)bis(methylene))bis(bis(2-methoxyphenyl)phosphine) of formula 2 shows the same activity expression as 3,3-bis-[bis-(2-methoxyphenyl)-phosphonylmethyl]-1,5-dioxa-spiro[5,5]undecane which is known as showing highest activity among polyketone polymerization catalyst introduced until now, and the structure is simpler and molecular weight is lower. Therefore, the present invention obtains highest activity as polymerization catalyst in relevant field, and providing novel polyketone polymerization catalyst with lower manufacturing cost and production cost. Manufacturing method of ligand for polyketone polymerization catalyst is as follows. Using bis(2-methoxyphenyl)phosphine, 5,5-bis(bromomethyl)-2,2-dimethyl-1,3-dioxane and sodium hydride (NaH) and obtaining ((2,2-dimethyl-1,3-dioxane-5,5-diyl)bis(methylene))bis(bis(2-methoxyphenyl)phosphine) features manufacturing method of ligand for polyketone polymerization catalyst. Manufacturing method of ligand for polyketone polymerization catalyst of the present invention is different from conventional synthesis method of 3,3-bis-[bis-(2-methoxyphenyl)phosphonylmethyl]-1,5-dioxa-spiro[5,5]undecane as under safe environment not using lithium through simple process, ((2,2-dimethyl-1,3-dioxane-5,5-diyl)bis(methylene))bis(bis(2-methoxyphenyl)phosphine) can be commercially mass-synthesized.

In a preferred embodiment, manufacturing method of ligand for polyketone polymerization catalyst of the present invention goes through (a) a step of inserting bis(2-methoxyphenyl)phosphine and dimethylsulfoxide (DMSO) to reaction vessel under nitrogen atmosphere and adding sodium hydride in room temperature and stirring; (b) a step of adding 5,5-bis(bromethyl)-2,2-dimethyl-1,3-dioxane and dimethylsulfoxide to obtained mixed solution and stirring and reacting; (c) a step of after completing reaction inserting methanol and stirring; (d) a step of inserting toluene and water after separating layer, cleaning oil layer with water and drying with anhydrous sodium sulfate, pressure filtering and pressure concentration; and (e) a step of recrystallizing residue under methanol and obtaining ((2,2-dimethyl-1,3-dioxane-5,5-diyl)bis(methylene))bis(bis(2-methoxyphenyl)phosphine).

The amount of Group 9, Group 10, or Group 11 transition metal compound (a) differs suitable value according to selected ethylenically and propylenically unsaturated compound type or different polymerization condition, so the range is not uniformly limited, but conventionally capacity of reaction zone is 0.01 to 100 mmol per liter, and preferably 0.01 to 10 mmol. Capacity of reaction zone refers to capacity of liquid phase of reactor. The amount of ligand (b) is not limited, but transition metal compound (a) per 1 mol is conventionally 0.1 to 3 mol and preferably 1 to 3 mol.

Moreover, adding benzophenone could be another feature in polymerization of the polyketone. In the present invention, in polymerization of polyketone by adding benzophenone, it can achieve effects of enhancing intrinsic viscosity of polyketone. The (a) Group 9, Group 10 or Group 11 transition metal compound and benzophenone molar ratio is 1: 5 to 100, preferably 1: 40 to 60. If transition metal and benzophenone molar ratio is less than 1:5, effects of enhancement in intrinsic viscosity of polyketone is not satisfactory, and if transition metal and benzophenone molar ratio is more than 1:100, catalyst activity of produced polyketone tends to decrease therefore not preferable.

Examples of ethylenically unsaturated compound polymerized with carbon monoxide are ethylene, propylene, 1-butene, 1-hexene, 4-methyl-1-pentene, 1-octene, 1-decene, 1-dodecene, 1-tetradecene, 1-hexadecene, α-olefin such as vinyl cyclohexane; alkenyl aromatic compound such as styrene, α-methyl styrene; cyclopentane, norbornene, 5-methyl norbornene, tetracyclododecene, tricyclo dodecane, tricyclo undecene, pentacyclopentadecene, pentacyclohexadecene, 8-ethyltetracyclododecene; halogenation vinyl such as vinyl chloride; acrylic ester such as ethyl acrylate and methyl acrylate. Among them preferable ethylenically unsaturated compound is α-olefin, and more preferably α-olefin with carbon number of 2 to 4.

Terpolymer of carbon monoxide, the ethylenically unsaturated compound and propylenically unsaturated compound occurs by organic metal complex catalyst comprising the Group 9, Group 10 or Group 11 transition metal compound (a), ligand having Group 15 element (b), and the catalyst is formed by contacting to the 2 components. Contacting method can be selected arbitrary. In other words, among suitable solvent, solution of mixed 2 components in advance can be used, or each of 2 components can separately be provided to polymerization system and contact in polymerization system.

Examples of a polymerization method include a solution polymerization method using a liquid medium, a suspension polymerization method, a vapor phase polymerization method in which a small amount of a polymer is impregnated with a high concentration catalyst solution, and etc. The polymerization may be either batch or continuous. The reactor used for the polymerization may be a known reactor as it is, or may be used by processing. Polymerization temperature is not particularly limited, and is generally 40 to 180°C, preferably 50 to 120°C. Polymerization pressure is not particularly limited, but is generally from normal pressure to 20 MPa, preferably from 4 to 15 MPa.

Number average molecular weight measured by gel penetration and chromatography is preferably 100 to 200,000 especially 20,000 to 90,000 of polyketone polymer. Physical properties of polymer according to molecular weight, according to whether polymer is a copolymer or terpolymer, or in case of terpolymer, it is determined according to properties of the second hydrocarbon portion. Polymer used in the present invention has conventional melting point of 175°C to 300°C, and generally 210°C to 270°C. Limiting Viscosity Number (LVN) of polymer measured by using standard viscosity measuring device with HFIP (Hexafluoroisopropylalcohol) in 60°C is 0.5 dl/g to 10 dl/g, and preferably 1 dl/g to 2 dl/g. In case of limiting viscosity number of polymer is less than 0.5, polyketone mechanical properties and chemical properties decline, and in case of limiting viscosity number of polymer is more than 10, moldability declines.

Meanwhile, polyketone molecular weight distribution is preferably 1.5 to 2.5, more preferably 1.8 to 2.2. If molecular weight distribution is less than 1.5, polymerization transference number declines, and if molecular weight distribution is more than 2.5, moldability declines. In order to adjust the molecular weight distribution adjusting proportionately according to palladium catalyst amount and polymerization temperature is possible. In other words, if palladium catalyst amount increases, or polymerization temperature is more than 100°C, molecular amount distribution increases. The melting point of the polyketone polymer is usually in a range of 175°C to 300°C, specifically 210°C to 270°C.

In the present invention, 75 to 85 weight% of a polyketone copolymer, 5 to 15 weight% of nylon and 5 to 15 weight% of a maleic anhydride grafted TPE are preferable in order to improve heat resistance of the polyketone resin composition. 5% to 15 weight% of PA6 relative to the total polyketone composition is added. If the amount is less than 5 weight%, heat resistance of the resin cannot be sufficiently secured. If the amount is more than 15 weight%, hydrogen barrier properties inherent to the polyketone declines.

Further, in the present invention, a thermoplastic elastomer (TPE) is further mixed to improve mechanical properties such as molding, processability and etc. of the polyketone resin composition. The TPE is preferably a maleic anhydride grafted TPE.

In this case, an amount of TPE added is preferably 5 weight% to 15 weight% based on the total weight of the composition. If the amount added is less than 5 weight%, processability declines. If it is more than 15 weight%, workability is not improved and production cost increases, and physical properties inherent to the polyketone declines.

The polyketone resin composition of the present invention is manufactured by melt-blending respective components at a temperature of 230°C using a co-directional biaxial screw extruder, pelletizing the components, and then injection molding at 180 to 280°C.

More specifically, the polyketone composition of the present invention is manufactured by a step of preparing a catalyst composition comprising a palladium compound, an acid having a pKa value of 6 or less, and a bidentate compound of phosphorus; a step of preparing a mixed solvent of methanol and water; a step of conducting a polymerization in presence of the catalyst composition and the mixed solvent to prepare a linear terpolymer of carbon monoxide, ethylene and propylene; a step of removing the remaining catalyst composition from the prepared linear terpolymer using a solvent (e.g., alcohol and acetone) to obtain a polyketone polymer; and a step of mixing (melt-kneading) the polyketone polymer with graphite and extruding it.

In the polymerization, a reaction temperature is suitably in a range of 50 to 100°C and a reaction pressure is in a range of 40 to 60 bar. Produced polymer is collected through filtration and purification after polymerization, and remaining catalyst composition is removed with a solvent such as alcohol or acetone. An extrusion temperature is preferably 230 to 260°C, and a screw rotation speed is preferably in a range of 100 to 300 rpm.

Linear alternative polyketone is formed according to polymerization method stated above.

Polyketone polymer of the present invention is polyketone copolymer of y/x 0.03 to 0.3. x and y in the following formula indicate each mol% in polymer.

$-(CH_2CH_2-CO)x-$ formula(1)

$-(CH_2CH(CH_3)-CO)y-$ formula(2)

Copolymer comprising repeating unit shown as formula (1) and (2) of the present invention, y/x is preferably 0.03 to 0.3. If the y/x is less than 0.05, there are limits such as melting property and processability decline, and if the y/x is more than 0.3, mechanical properties decline. Moreover, y/x is more preferably 0.03 to 0.1. Also, melting point of polymer can be adjusted by adjusting ratio of ethylene and propylene of polyketone polymer. For example, in case of molar ratio of ethylene : propylene : carbon monoxide is adjusted to 46 : 4 : 50, melting point is approximately 220°C, and if molar ratio is adjusted to 47.3 : 2.7 : 50, melting point is adjusted to 235°C.

Also, in the present invention, glass fiber, thermal plastic elastomer (TPE) and nylon 6 may be blended to improve mechanical properties such as molding, processability and etc. of the polyketone resin composition.

The glass fibers added in the present invention preferably have a particle diameter of 10 to 13 μm. If the particle diameter of the glass fiber is less than 10 μm, a shape of the glass fiber may change and mechanical properties may decline.

The glass fiber is preferably mixed in amount of 5 to 20 parts by weight based on 100 parts by weight of the polyketone copolymer. When the amount is less than 5 parts by weight, an effect of improving physical properties in gas barrier properties and impact resistance is insignificant. When the amount is more than 20 parts by weight, mechanical strength and processability inherent to the polyketone decline.

As the glass fiber, bis(3,3-bis- (4'-hydroxy-3'-tetrabutylphenol)butanoic acid)-glycol ester, 1,6-hexanediylbis (3,5-(4'-hydroxy-3'-tetrabutylphenol) is used, and preferably (3,3-bis-(4'-hydroxy-3'-tetrabutylphenol)butanoic acid)-glycol ester which is excellent in heat aging resistance, is used.

The TPE is preferably a grafted maleic anhydride.

In this case, an added amount of TPE and nylon 6 is preferably 5 to 15 parts by weight relative to 100 parts by weight of the polyketone copolymer. If the amount added is less than 5 parts by weight, workability declines. If it exceeds 15 parts by weight, workability is not improved, production cost increases, and inherent properties of polyketone declines.

Hereinafter, the present invention is described in more detail with reference to the following examples. However, the following examples are illustrative of the present invention and are not to be construed as limiting the scope of the present invention. The present invention is illustrated in detail by following non-limiting examples.

Example 1

Linear alternating polyketone terpolymers comprising carbon monoxide and ethylene and propene are prepared under presence of catalyst composition formed from palladium acetate, trifluoroacetic acid and ((2,2-dimethyl-1,3-dioxane-5,5-diyl)bis(methylene)bis(2-methoxyphenyl) phosphine). In the prepared polyketone terpolymer, a molar ratio of ethylene to propene was 46:4. Also, a melting point of the polyketone terpolymer was 220°C, LVN measured at 25°C by HFIP (hexafluoroisopropanol) was 2.0 dl/g, MI index was 6 g/10 min and MWD was 2.0.

The polyketone terpolymer prepared above was molded into pellets on an extruder using a biaxial screw having a diameter of 2.5 cm and L/D = 32, which was operated at 250 rpm, and then injection molded to produce a specimen for a vehicle fuel tank. Properties of the specimen were evaluated by following method in comparison with products of Comparative Example 1 and 2, and results are shown in Table 1.

Example 2

The same as Example 1 except that intrinsic viscosity of the polyketone terpolymer was adjusted to 1.1.

Example 3

The same as Example 1 except that intrinsic viscosity of the polyketone terpolymer was adjusted to 1.4.

Example 4

The same as Example 1 except that MWD of the polyketone terpolymer was adjusted to 1.8.

Example 5

The same as Example 1 except that MWD of the polyketone terpolymer was adjusted to 2.2.

Comparative Example 1 to 2

Pellets made of pellets of HDPE and EVOH and pellets of HDPE instead of polyketone terpolymer were injection molded to prepare specimens for a vehicle fuel tank and properties were evaluated by following methods and results are shown in Table 1.

Properties Evaluation

The pellets prepared in Example 1 were injection-molded to prepare a specimen for a vehicle fuel tank. Properties of the specimens were evaluated in following method in comparison with products of Comparative Examples 1 and 2, and results are shown in Table 1.

1. Gas barrier properties (gas permeability coefficient): Measured at 23°C and 50 % RH.
2. Impact strength evaluation: Performed according to ASTM D256.

Table 1

| Division | Unit | Example 1 | Example 2 | Example 3 | Example 4 | Example 5 | Comparative Example 1 | Comparative Example 2 |
|---|---|---|---|---|---|---|---|---|
| Structure | - | Polyketone (5T) | Polyketone (5T) | Polyketone (5T) | Polyketone (5T) | Polyketone (5T) | HDPE-EVOH-HDPE(2T-1T-2T) | HDPE(5T) |
| Permeability coefficient (Fuel C) | gmm/ $m^2$ day | 0.005 | 0.008 | 0.007 | 0.006 | 0.009 | 0.012 | 35 |
| Permeability coefficient (Fuel C+15% MeOH) | gmm/ $m^2$ day | 2 | 5 | 3 | 4 | 6 | 10 | 35 |
| Impact strength (room temperature) | $kJ/m^2$ | 18.0 | 17.0 | 17.4 | 16.9 | 17.8 | 16.0 | 40.0 |
| Impact strength (-40°C) | $kJ/m^2$ | 10.0 | 9.5 | 9.8 | 8.9 | 9.7 | 8.0 | 9.0 |

According to the Table 1, the Example has a lower gas permeability coefficient than the Comparative examples, and thus is excellent in gas barrier property. And the impact strength is also excellent at both room temperature and low temperature. Therefore, the specimen prepared by Example of the present invention is suitable for use as a vehicle fuel tank.

Example 6

Linear alternating polyketone terpolymers comprising carbon monoxide and ethylene and propene are prepared under presence of catalyst composition formed from palladium acetate, trifluoroacetic acid and ((2,2-dimethyl-1,3-dioxane-5,5-diyl)bis(methylene)bis(2-methoxyphenyl) phosphine). In the prepared polyketone terpolymer, a molar ratio of ethylene to propene was 46:4. Also, a melting point of the polyketone terpolymer was 220°C, LVN measured at 25°C by HFIP (hexafluoroisopropanol) was 1.4 dl/g and MI index was 48 g/10 min.

70 weight% of the polyketone terpolymer prepared above and 30 weight% of glass fiber were mixed and molded into pellets on an extruder using a biaxial screw having a diameter of 2.5 cm and L/D = 32, which was operated at 250 rpm, and then injection molded to produce a specimen for a vehicle oil pan.

Example 7

The same as Example 6 except that 40 weight% of glass fiber and 60 weight% of the polyketone were used.

Example 8

The same as Example 6 except that intrinsic viscosity of the polyketone terpolymer was adjusted to 1.1.

Example 9

The same as Example 6 except that intrinsic viscosity of the polyketone terpolymer was adjusted to 2.0.

Comparative Example 3

The same as Example 6 except that 70 weight% of the PA66 as material of DuPont and 30 weight% of glass fiber were used.

The pellets obtained in Examples and Comparative Examples were used to prepare specimens for a vehicle oil pan, and physical properties were evaluated according to following method. Results are shown in Table 2.

Properties evaluation method

1. Gas barrier properties: Oxygen permeability was measured in dry state and 90 % R.H state (temperature 25°C) using Model #8000 instrument manufactured by Illinois Instruments Inc., USA. In this case, a resin composition layer was positioned so as locate on oxygen side and measured.
2. Izod impact strength: Performed according to ASTM D-256.
3. Heat resistance: Performed according to ASTM D-648. A standard value should be 185°C or more (heat distortion temperature).
4. Evaluation of strain under oil environment: Evaluation was made according to MS211-47 for vertical and horizontal directions after immersion in oil for 500 hours at room temperature.

Table 2

| Division | Gas barrier properties cc/m$^2$,atm,day | | Impact strength kgfcm/cm | | Evaluation of strain under oil environment | |
|---|---|---|---|---|---|---|
| | 25°C dry | 25°C, R.H. 80% | 0°C | 23°C | Vertical direction (%) | Horizontal direction (%) |
| Example 6 | 8 | 25 | 12.4 | 45.5 | 0.152 | 0.170 |
| Example 7 | 9 | 28 | 15.4 | 62.1 | 0.154 | 0.178 |

(continued)

| Division | Gas barrier properties cc/m²,atm,day | | Impact strength kgfcm/cm | | Evaluation of strain under oil environment | |
|---|---|---|---|---|---|---|
| | 25°C dry | 25°C, R.H. 80% | 0°C | 23°C | Vertical direction (%) | Horizontal direction (%) |
| Example 8 | 7 | 26 | 10.4 | 42.1 | 0.153 | 0.174 |
| Example 9 | 9 | 23 | 13.1 | 46.3 | 0.151 | 0.178 |
| Comparative Example 3 | 30 | 65 | 8.1 | 24.4 | 0.180 | 0.210 |

In Table 2, the polyketone resin composition prepared according to the present invention was found to be more suitable for use as a material for a vehicle oil pan because of its excellent gas barrier properties, impact resistance, and oil resistance compared to conventional polyamide materials. In particular, when the vehicle oil pan of the present invention contains 5 to 50 weight% of the glass fiber with respect to the whole blend, dimensional change rate under the oil environment is small, thereby the oil resistance is good. It is suitable to be applied to the vehicle oil pan which is likely to be exposed to oil. If the content of the glass fiber is less than 5 weight%, the oil resistance and the mechanical properties are low, and when it is more than 50 weight%, it is difficult to perform blending and injection molding.

Example 10

Linear alternating polyketone terpolymers comprising carbon monoxide and ethylene and propene are prepared under presence of catalyst composition formed from palladium acetate, trifluoroacetic acid and ((2,2-dimethyl-1,3-dioxane-5,5-diyl)bis(methylene)bis(2-methoxyphenyl) phosphine). In the above, content of trifluoroacetic acid with respect to palladium is 10 times the molar ratio, and two stages of the first stage at a polymerization temperature of 78°C and the second stage at 84°C are carried out. In the prepared polyketone terpolymer, a molar ratio of ethylene to propene was 46:4. Also, a melting point of the polyketone terpolymer was 220°C, LVN measured at 25°C by HFIP (hexafluoroisopropanol) was 1.4 dl/g, MI index was 60 g/10 min and MWD was 2.0.

80 weight% of the polyketone terpolymer prepared above, 10 weight% of nylon 6 and 10 weight% of maleic anhydride grafted TPE were mixed and molded on an extruder using a biaxial screw having a diameter of 40 mm and L/D = 32, which was operated at 250 rpm to prepare a specimen. In order to evaluate the gas barrier properties, the specimen was processed into film form and their properties were evaluated.

Example 11

Linear alternating polyketone terpolymers comprising carbon monoxide and ethylene and propene are prepared under presence of catalyst composition formed from palladium acetate, trifluoroacetic acid and ((2,2-dimethyl-1,3-dioxane-5,5-diyl)bis(methylene)bis(2-methoxyphenyl) phosphine). In the above, content of trifluoroacetic acid with respect to palladium is 10 times the molar ratio, and two stages of the first stage at a polymerization temperature of 78°C and the second stage at 84°C are carried out. In the prepared polyketone terpolymer, a molar ratio of ethylene to propene was 46:4. Also, a melting point of the polyketone terpolymer was 220°C, LVN measured at 25°C by HFIP (hexafluoroisopropanol) was 1.6 dl/g, MI index was 60 g/10 min and MWD was 2.0.

80 weight% of the polyketone terpolymer prepared above, 10 weight% of nylon 6 and 10 weight% of maleic anhydride grafted TPE were mixed and molded on an extruder using a biaxial screw having a diameter of 40 mm and L/D = 32, which was operated at 250 rpm to prepare a specimen. In order to evaluate the gas barrier properties, the specimen was processed into film form and their properties were evaluated.

Example 12

Linear alternating polyketone terpolymers comprising carbon monoxide and ethylene and propene are prepared under presence of catalyst composition formed from palladium acetate, trifluoroacetic acid and ((2,2-dimethyl-1,3-dioxane-5,5-diyl)bis(methylene)bis(2-methoxyphenyl) phosphine). In the above, content of trifluoroacetic acid with respect to palladium is 10 times the molar ratio, and two stages of the first stage at a polymerization temperature of 78°C and the second stage at 84°C are carried out. In the prepared polyketone terpolymer, a molar ratio of ethylene to propene was 46:4. Also, a melting point of the polyketone terpolymer was 220°C, LVN measured at 25°C by HFIP (hexafluoroisopropanol) was 2.0 dl/g, MI index was 60 g/10 min and MWD was 2.0. 80 weight% of the polyketone terpolymer prepared

above, 10 weight% of nylon 6 and 10 weight% of maleic anhydride grafted TPE were mixed and molded on an extruder using a biaxial screw having a diameter of 40 mm and L/D = 32, which was operated at 250 rpm to prepare a specimen. In order to evaluate the gas barrier properties, the specimen was processed into film form and their properties were evaluated.

Example 13

Linear alternating polyketone terpolymers comprising carbon monoxide and ethylene and propene are prepared under presence of catalyst composition formed from palladium acetate, trifluoroacetic acid and ((2,2-dimethyl-1,3-dioxane-5,5-diyl)bis(methylene)bis(2-methoxyphenyl) phosphine). In the above, content of trifluoroacetic acid with respect to palladium is 10 times the molar ratio, and two stages of the first stage at a polymerization temperature of 78°C and the second stage at 84°C are carried out. In the prepared polyketone terpolymer, a molar ratio of ethylene to propene was 46:4. Also, a melting point of the polyketone terpolymer was 220°C, LVN measured at 25°C by HFIP (hexafluoroisopropanol) was 1.2 dl/g, MI index was 60 g/10 min and MWD was 2.0. 80 weight% of the polyketone terpolymer prepared above, 10 weight% of nylon 6 and 10 weight% of maleic anhydride grafted TPE were mixed and molded on an extruder using a biaxial screw having a diameter of 40 mm and L/D = 32, which was operated at 250 rpm to prepare a specimen. In order to evaluate the gas barrier properties, the specimen was processed into film form and their properties were evaluated.

Comparative Example 4

HDPE as a material of DuPont was molded on an extruder using a biaxial screw having a diameter of 40 mm and L/D = 32, which was operated at 250 rpm to prepare a specimen. In order to evaluate the gas barrier properties, the specimen was processed into film form and their properties were evaluated.

The pellets obtained in the above Examples and Comparative Examples were used to prepare specimens for use in a vehicle hydrogen tank liner. The properties of the specimens were evaluated according to following method. Results are shown in Table 3.

Properties evaluation method

1. Hydrogen barrier properties: Hydrogen permeability was measured for each film sample using OX-TRAN 2/20 manufactured by MOCON. The hydrogen permeability at 23°C, 60 % RH.1 atm was measured and converted to a film thickness of 1 mm.
2. Izod impact strength: Performed according to ASTM D-256.
3. Heat resistance: Performed according to ASTM D-648. A standard value should be 185°C or more (heat distortion temperature).
4. Friction and wear resistance (Ring-on-Ring Type, Large resin): A through-type test piece having an outer diameter of 25.6 mm, an inner diameter of 20 mm and a height of 15 mm was injection-molded and fixed to a testing apparatus. A test was carried out under the driving conditions of a pressing load of 6.6 kgf and a linear velocity of 10 cm/s. In this case, non-wear amount was calculated using a following formula to evaluate the friction and wear resistance. The smaller the amount of non-wear obtained, the better the friction and wear resistance.

$$\text{Non-wear amount} = \text{wear weight(mg)}/[\text{density}(mg/mm^3) \times \text{pressing load(kgf)} \times \text{travel distance(km)}]$$

*Test apparatus: Trust type (Friction and wear tester)

Table 3

| Division | Gas barrier properties ccmm/$m^2$atmday (23°C, 60 % RH) | Impact strength kJ/$m^2$ | Heat resistance (°C) | Wear amount $mm^3$/kg/km |
|---|---|---|---|---|
| Example 10 | 0.05 | 28.5 | 195 | 1.12 |

(continued)

| Division | Gas barrier properties ccmm/m$^2$atmday (23°C, 60 % RH) | Impact strength kJ/m$^2$ | Heat resistance (°C) | Wear amount mm$^3$/kg/km |
|---|---|---|---|---|
| Example 11 | 0.07 | 31.2 | 198 | 0.89 |
| Example 12 | 0.06 | 33.4 | 197 | 0.72 |
| Example 13 | 0.05 | 28.0 | 191 | 1.14 |
| Comparative Example 4 | 5.65 | 23.2 | 168 | 11.2 |

In Table 3, the polyketone resin composition prepared according to the present invention is excellent in gas barrier properties, impact resistance, heat resistance and wear resistance, thereby it is proved to be suitable for use as a material for a vehicle hydrogen tank liner. In particular, the film sample of the present invention was evaluated as having excellent hydrogen permeability of less than 0.1 ccmm/m$^2$atm·day at 23°C and 60 % RH.

Example 14

Under presence of catalyst composition formed from palladium acetate, trifluoroacetic acid and ((2,2-dimethyl-1,3-dioxane-5,5-diyl)bis(methylene)bis(2-methoxyphenyl) phosphine), linear alternating polyketone terpolymers comprising carbon monoxide and ethylene and propene are prepared. In the above, content of trifluoroacetic acid with respect to palladium is 11 times the molar ratio, and two stages of the first stage at a polymerization temperature of 80°C and the second stage at 84°C are carried out. In the prepared polyketone terpolymer, a molar ratio of ethylene to propene was 46:4. Also, a melting point of the polyketone terpolymer was 220°C, LVN measured at 25°C by HFIP (hexafluoroisopropanol) was 1.2 dl/g, MI index was 60 g/10 min and MWD was 2.0.

The polyketone terpolymer prepared above was extruded through melt-kneading on an extruder using a biaxial screw having L/D 32 and D 40 at 240°C, which was operated at 250 rpm.

Example 15

Under presence of catalyst composition formed from palladium acetate, trifluoroacetic acid and ((2,2-dimethyl-1,3-dioxane-5,5-diyl)bis(methylene)bis(2-methoxyphenyl) phosphine), linear alternating polyketone terpolymers comprising carbon monoxide and ethylene and propene are prepared. In the above, content of trifluoroacetic acid with respect to palladium is 10 times the molar ratio, and two stages of the first stage at a polymerization temperature of 78°C and the second stage at 84°C are carried out. In the prepared polyketone terpolymer, a molar ratio of ethylene to propene was 46:4. Also, a melting point of the polyketone terpolymer was 220°C, LVN measured at 25°C by HFIP (hexafluoroisopropanol) was 1.4 dl/g, MI index was 45 g/10 min and MWD was 2.0.

The polyketone terpolymer prepared above was extruded through melt-kneading on an extruder using a biaxial screw having L/D32 and D 40 at 240°C, which was operated at 250 rpm.

Example 16

Under presence of catalyst composition formed from palladium acetate, trifluoroacetic acid and ((2,2-dimethyl-1,3-dioxane-5,5-diyl)bis(methylene)bis(2-methoxyphenyl) phosphine), linear alternating polyketone terpolymers comprising carbon monoxide and ethylene and propene are prepared. In the above, content of trifluoroacetic acid with respect to palladium is 9 times the molar ratio, and two stages of the first stage at a polymerization temperature of 74°C and the second stage at 84°C are carried out. In the prepared polyketone terpolymer, a molar ratio of ethylene to propene was 46:4. Also, a melting point of the polyketone terpolymer was 220°C, LVN measured at 25°C by HFIP (hexafluoroisopropanol) was 1.6 dl/g, MI index was 20 g/10 min and MWD was 2.0.

The polyketone terpolymer prepared above was extruded through melt-kneading on an extruder using a biaxial screw having L/D32 and D 40 at 240°C, which was operated at 250 rpm.

Example 17

Under presence of catalyst composition formed from palladium acetate, trifluoroacetic acid and ((2,2-dimethyl-1,3-dioxane-5,5-diyl)bis(methylene)bis(2-methoxyphenyl) phosphine), linear alternating polyketone terpolymers comprising carbon monoxide and ethylene and propene are prepared. In the above, content of trifluoroacetic acid with respect to palladium is 10 times the molar ratio, and two stages of the first stage at a polymerization temperature of 78°C and the second stage at 84°C are carried out. In the prepared polyketone terpolymer, a molar ratio of ethylene to propene was 46:4. Also, a melting point of the polyketone terpolymer was 220°C, LVN measured at 25°C by HFIP (hexafluoroisopropanol) was 1.4 dl/g, MI index was 45 g/10 min and MWD was 1.8. The polyketone terpolymer prepared above was extruded through melt-kneading on an extruder using a biaxial screw having L/D32 and D 40 at 240°C, which was operated at 250 rpm.

Example 18

Under presence of catalyst composition formed from palladium acetate, trifluoroacetic acid and ((2,2-dimethyl-1,3-dioxane-5,5-diyl)bis(methylene)bis(2-methoxyphenyl) phosphine), linear alternating polyketone terpolymers comprising carbon monoxide and ethylene and propene are prepared. In the above, content of trifluoroacetic acid with respect to palladium is 10 times the molar ratio, and two stages of the first stage at a polymerization temperature of 78°C and the second stage at 84°C are carried out. In the prepared polyketone terpolymer, a molar ratio of ethylene to propene was 46:4. Also, a melting point of the polyketone terpolymer was 220°C, LVN measured at 25°C by HFIP (hexafluoroisopropanol) was 1.4 dl/g, MI index was 45 g/10 min and MWD was 2.2. The polyketone terpolymer prepared above was mixed and extruded through melt-kneading on an extruder using a biaxial screw having L/D32 and D 40 at 240°C, which was operated at 250 rpm.

Comparative Example 5

The same as Example 14 except that polypropylene was used as a material of Lotte Chemical Co. instead of the polyketone copolymer.

Properties Evaluation

The prepared pellets of the above examples were injection-molded to prepare sealed food containers. Durability and airtightness were evaluated by following method in comparison with sealed food containers of Comparative Examples and results are shown in Table 4.

1. Durability evaluation: Notched Izod impact strength of moldings prepared from Examples and Comparative Examples were evaluated for against ASTM D256, 1/4 inch thick specimens at room temperature.

2. Airtightness evaluation

1) Oxygen permeability test: A food sealed container manufactured with a thickness of 2.5 mm was placed in an oxygen permeability meter (Mocon, OX-TRAN 2/20) and stabilized with nitrogen for 24 hours at 23°C and 90 % RH. The oxygen permeability until amount of oxygen permeability reached an equilibrium state was measured.

Table 4

| Item | Example 14 | Example 15 | Example 16 | Example 17 | Example 18 | Comparative Example 5 |
|---|---|---|---|---|---|---|
| Impact Strength ($kJ/m^2$) | 12 | 14 | 16 | 11 | 13 | 7 |
| Oxygen permeability (cc/pack.day) | 0.0075 | 0.0061 | 0.0046 | 0.0060 | 0.0067 | 0.152 |

As shown in Table 4, in Examples 14 to 18, it is evaluated to have excellent durability (excellent impact strength of 10 $kJ/m^2$ or more) and airtightness (excellent oxygen permeability of 0.01 to 0.001 cc/pack.day) compared with Comparative example, thereby it has properties suitable for use as a sealed food container.

## Claims

1. A polyketone copolymer with excellent gas barrier properties, comprising repeating units represented by following general formula (1) and (2), wherein y/x is 0.03 to 0.3.

$$-(CH_2CH_2\text{-}CO)x- \quad (1)$$

$-(CH_2CH(CH_3)-CO)y-$ (2)

(x and y are mole% of each of the general formula (1) and (2) in a polymer)

**2.** A vehicle fuel tank manufactured by injection molding a polyketone copolymer comprising repeating units represented by following general formula (1) and (2), wherein y/x is 0.03 to 0.3.

$-(CH_2CH_2-CO)x-$ (1)

$-(CH_2CH(CH_3)-CO)y-$ (2)

(x and y are mole% of each of the general formula (1) and (2) in a polymer)

**3.** The vehicle fuel tank of claim 2, wherein intrinsic viscosity of the polyketone copolymer is 1.0 to 2.0 dl/g.

**4.** The vehicle fuel tank of claim 2, wherein ligand of catalyst composition used in polymerization of the polyketone copolymer is ((2,2-dimethyl-1,3-dioxane,5,5-diyl)bis(methylene))bis(bis(2-methoxyphenyl)phosphine).

**5.** The vehicle fuel tank of claim 2, wherein in condition of temperature 23°C, relative humidity 50 % and a fuel filled state, gas permeability coefficient is 0.01 gmm/$m^2$day or less.

**6.** The vehicle fuel tank of claim 2, wherein in condition of temperature 23°C, relative humidity 50 % and a fuel and 15 % methanol filled state, gas permeability coefficient is 5 gmm/$m^2$day or less.

**7.** A vehicle oil pan, comprising a blend of a linear alternating polyketone copolymer comprising carbon monoxide and at least one kind of olefinically unsaturated hydrocarbon and glass fiber, wherein the glass fiber is 5 to 50 weight% to the total blend.

**8.** The vehicle oil pan of claim 7, wherein intrinsic viscosity of the polyketone copolymer is 1.0 to 2.0 dl/g.

**9.** The vehicle oil pan of claim 7, wherein a molar ratio of ethylene to propylene is 9 to 24:1.

**10.** The vehicle oil pan of claim 7, wherein a molecular weight distribution is 1.5 to 2.5.

**11.** The vehicle oil pan of claim 7, wherein ligand of catalyst composition used in polymerization of the polyketone copolymer is ((2,2-dimethyl-1,3-dioxane,5,5-diyl)bis(methylene))bis(bis(2-methoxyphenyl)phosphine).

**12.** A vehicle hydrogen tank liner manufactured by injection molding a polyketone resin composition which is a linear alternating polyketone copolymer comprising carbon monoxide and at least one kind of olefinically unsaturated hydrocarbon and having hydrogen permeability of 0.1 ccmm/$m^2$atmday in condition of temperature 23°C and 60 % RH.

**13.** The vehicle hydrogen tank liner of claim 12, wherein the polyketone resin composition is produced by mixing 75 to 85 weight% of the polyketone copolymer, 5 to 15 weight% of nylon 6 and 15 weight% of maleic anhydride grafted TPE.

**14.** The vehicle hydrogen tank liner of any one among claims 12 to 13, wherein the polyketone copolymer comprises repeating unit represented by following general formula (1).

[Formula 1] $-CO-(-CH_2-CH_2-)-x-CO-(G)-y-$

**15.** The vehicle hydrogen tank liner of claim 14,
wherin intrinsic viscosity of the polyketone copolymer is 1.0 to 2.0 dl/g and a molecular weight distribution is 1.5 to 2.5.

**16.** The vehicle hydrogen tank liner of claim 15,
wherein the polyketone copolymer is manufactured by:

a step of preparing a catalyst composition comprising a palladium compound, an acid having a pKa value of 6 or less, and a bidentate compound of phosphorus;
a step of preparing a mixed solvent of methanol and water;
a step of conducting a polymerization in presence of the catalyst composition and the mixed solvent to prepare a linear terpolymer of carbon monoxide, ethylene and propylene;
a step of removing the remaining catalyst composition from the prepared linear terpolymer using a solvent to obtain a polyketone polymer.

**17.** A sealed food container that stores various food inside,
manufactured by a polyketone copolymer comprising repeating units represented by following general formula (3) and (4).

[Formula 3] $-(CH_2CH_2\text{-}CO)x-$

[Formula 4] $-(CH_2CH(CH_3)\text{-}CO)y-$

(x and y are mole% of each of the general formula (1) and (2) in a polymer, wherein y/x is 0.03 to 0.3)

**18.** The sealed food container of claim 17,
wherein the polyketone copolymer is manufactured sequentially through steps of:

a step of preparing a catalyst composition comprising a palladium compound, an acid having a pKa value of 6 or less, and a bidentate compound of phosphorus;
a step of preparing a mixed solvent of methanol and water;
a step of conducting a polymerization in presence of the catalyst composition and the mixed solvent to prepare a linear terpolymer of carbon monoxide, ethylene and propylene;
a step of removing the remaining catalyst composition from the prepared linear terpolymer using a solvent to obtain a polyketone polymer.

**19.** The sealed food container of any one of claims 17 or 18,
wherein intrinsic viscosity of the polyketone copolymer is 1.0 to 2.0 dl/g and a molecular weight distribution is 1.5 to 2.5.

**20.** The sealed food container of claim 19,
wherein Notched Izod impact strength measured by ASTM D256, ¼ inch thick specimen at room temperature is 10 $kJ/m^2$ or more.

**21.** The sealed food container of claim 20,
wherein in condition of temperature 23°C and 90 % RH, oxygen permeability is 0.01 to 0.001 cc/pack.day.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4965104 A
- KR 10445454
- KR 10810865
- US 5429845 A